# EUROPÄISCHE PATENTANMELDUNG

(11) **EP 3 026 682 A1**
(43) Veröffentlichungstag der Anmeldung: **01.06.2016**
(21) Anmeldenummer: 14195280.4
(22) Anmeldetag: 27.11.2014
(51) Int. Cl.: H01F 27/36, H01F 38/14, B60L 11/18

(54) **Abschirmmodul eines kontaktlosen Energieübertragungssystems mit verbesserter mechanischer Stabilität**

(71) Anmelder: Brusa Elektronik AG, 9466 Sennwald (CH)
(72) Erfinder: Die Erfindernennung liegt noch nicht vor
(74) Vertreter: Patentbüro Paul Rosenich AG

(57) **Zusammenfassung**

Die Erfindung betrifft ein Abschirmmodul (1) für eine ringförmige Sendespule/Empfangsspule (7) eines kontaktlosen Energieübertragungssystems (14). Das Abschirmmodul (1) umfasst eine magnetische Abschirmung (2) mit einer magnetischen Leitfähigkeit beziehungsweise Permeabilität µr ≥ 4, welche im Bereich eines horizontalen Abschnitts (A) erste Ausnehmungen (B) aufweist, durch welche Stützen (3) aus einem Material mit einer elektrischen Leitfähigkeit ≤ 10⁻⁴ S/m und einer magnetischen Leitfähigkeit beziehungsweise Permeabilität µr ≤2 hindurch ragen. Zudem wird ein Sender/Empfänger (6, 6a, 6b) mit einem solchen Abschirmmodul (1) und einer Sendespule/Empfangsspule (7) angegeben. Schliesslich betrifft die Erfindung auch ein Energieübertragungssystem (14) mit einem solchen Sender (6, 6a) sowie einer in einem Kraftfahrzeug (13) eingebauten Empfangsspule (6b).

## Beschreibung

Die Erfindung betrifft ein Abschirmmodul für eine ringförmige Sendespule/Empfangsspule eines kontaktlosen Energieübertragungssystems, umfassend eine magnetische Abschirmung mit einer magnetischen Leitfähigkeit beziehungsweise Permeabilität µr ≥ 4. Weiterhin betrifft die Erfindung einen Sender/Empfänger eines Energieübertragungssystems mit einem Abschirmmodul der genannten Art und einer darin angeordneten Sendespule/Empfangsspule. Schliesslich betrifft die Erfindung auch ein Energieübertragungssystem mit einem solchem Sender sowie einen in einem Kraftfahrzeug eingebauten Empfänger.

Kontaktlose Energieübertragungssysteme für elektrische Energie sind grundsätzlich bekannt. Dabei wird mit einer Sendespule ein Magnetfeld erzeugt, das in einer gegenüberliegend angeordneten Empfangsspule einen Strom erzeugt, der entweder direkt zum Betrieb eines elektrischen Geräts oder aber zum Laden eines Akkumulators genutzt wird. Um das magnetische Feld zu lenken, beziehungsweise auch um dieses von bestimmten Bereichen fernzuhalten, wird häufig eine magnetische Abschirmungen eingesetzt, die benachbart zu der Sendespule respektive Empfangsspule angeordnet ist.

In bestimmten Anwendungen können erhöhte Anforderungen an die mechanische Stabilität eines Senders/Empfänger und im Besonderen an dessen magnetische Abschirmung gestellt sein, beispielsweise wenn diese besonders gross ist oder sonst aussergewöhnlich hohe Kräfte auf die genannten Komponenten wirken. Insbesondere betrifft dies Ladesysteme von Elektrokraftfahrzeugen, die einerseits vergleichsweise gross sind, andererseits aber auch hohen Kräften ausgesetzt werden können. Beispielsweise kann ein Sender eines solchen Energieübertragungssystems von einem Kraftfahrzeug überfahren werden, oder ein mit einem solchen Empfänger ausgestattetes Kraftfahrzeug kann aufsitzen.

Gewöhnlich wird eine Abschirmung der genannten Art aus Ferrit gefertigt, das an sich vergleichsweise spröde ist und leicht bricht. Unter den gegebenen Umständen kann eine magnetische Abschirmung nach dem Stand der Technik demzufolge leicht zu Bruch gehen.

Eine Aufgabe der Erfindung ist es daher, ein verbessertes Abschirmmodul, einen verbesserten Sender/Empfänger sowie ein verbessertes Energieübertragungssystem anzugeben. Insbesondere soll die mechanische Stabilität der genannten Komponenten verbessert werden, ohne dass dabei die Energieübertragung nennenswert negativ beeinflusst wird oder nennenswerte Streufelder entstehen.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung weist die Abschirmung im Bereich eines horizontalen Abschnitts erste Ausnehmungen auf, durch welche Stützen aus einem Material mit einer elektrischen Leitfähigkeit ≤ 10⁻⁴ S/m und einer magnetischen Leitfähigkeit beziehungsweise Permeabilität µr ≤ 2 hindurch ragen.

Gemäss der Erfindung umfasst der Sender/Empfänger eines Energieübertragungssystems ein Abschirmmodul der genannten Art und eine darin angeordnete Sendespule/Empfangsspule.

Gemäss der Erfindung umfasst ein Energieübertragungssystem einen Sender der oben genannten Art sowie einen in einem Kraftfahrzeug eingebauten Empfänger respektive ein Kraftfahrzeug mit einem darin eingebauten Empfänger.

Gemäss der Erfindung wird ein Abschirmmodul der genannten Art respektive ein Sender/Empfänger der oben genannten Art schliesslich zur Ladung eines in einem Kraftfahrzeug angeordneten Akkumulators verwendet.

Durch die vorgeschlagenen Massnahmen wird die mechanische Stabilität eines Abschirmmoduls, respektive eines Senders/Empfängers mit einem solchen Abschirmmodul wesentlich verbessert, da auf die Abschirmung wirkende Kräfte mit Hilfe der Stützen gut abgeleitet werden. Die magnetische Kopplung zwischen Sender und Empfänger wird dabei nicht wesentlich beeinflusst. Auch entstehen dadurch keine nennenswerten Streufelder.

Die Kopplung gibt generell das Verhältnis zwischen dem vom Sender ausgehenden magnetischen Fluss und dem durch den Empfänger gehenden magnetischen Fluss an und kann definitionsgemäss Werte zwischen 0 und 1 annehmen. Das Streufeld ist jener Teil des vom Sender emittierten magnetischen Feldes, der nicht durch die Empfangsspule geht.

Insbesondere sind die Stützen vertikal ausgerichtet, wodurch vor allem vertikal wirkende Kräfte gut abgeleitet werden können, so wie sie beim Überfahren eine Senders durch ein Kraftfahrzeug oder beim Aufsitzen des Kraftfahrzeugs in einem Empfänger entstehen. Aufgrund der rauen Einsatzbedingungen eignet sich ein Empfänger der genannten Art insbesondere für den Einsatz in geländegängigen Fahrzeugen. Prinzipiell kann ein solcher Empfänger aber ebenso in anderen Fahrzeugklassen eingesetzt werden. Selbstverständlich können die genannten Stützen auch schräg wirkende Kräfte ableiten, und die Stützen können gegenüber der Vertikalen auch geneigt ausgeführt sein.

Das vorgeschlagene kontaktlose Energieübertragungssystem umfasst insbesondere keine magnetischen Kerne, die bei der Energieübertragung einander berühren. Das heisst, zwischen der Sendespule und der Empfangsspule befindet sich während der Energieübertragung ein durchgehender Luftspalt beziehungsweise andere Stoffe mit einer Permeabilitätszahl µᵣ < 1,01. In Anwendungen zum Laden eines Elektrokraftfahrzeugs kann der Abstand zwischen Sender und Empfänger insbesondere zwischen 50 mm und 110 mm betragen.

In Anwendungen zum Laden eines Elektrokraftfahrzeugs ist für den Sender auch der Begriff "Ground Pad Module" und für den Empfänger der Begriff "Car Pad Module" gebräuchlich.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn das Abschirmmodul ein unterhalb der Abschirmung angeordnetes erstes Tragelement aus einem Material mit einer elektrischen Leitfähigkeit ≤ 10⁻⁴ S/m und einer magnetischen Leitfähigkeit beziehungsweise Permeabilität µr ≤ 2 aufweist, wobei das erste Tragelement zweite Ausnehmungen aufweist, durch welche die genannten Stützen hindurch ragen. Auf diese Weise kann eine Kraftübertragung über das erste Tragelement vermieden werden. Dies ist insbesondere dann von Vorteil, wenn die magnetische Abschirmung mit dem ersten Tragelement fix verbunden, beispielsweise auf diese aufgeklebt ist. Generell ist es von Vorteil, wenn die zweiten Ausnehmung des ersten Tragelements gleich gross sind wie die ersten Ausnehmungen in der Abschirmung. Prinzipiell ist es aber ausreichend, wenn es zumindest einen Schnittbereich gibt, durch den die Stützen hindurch ragen.

Günstig ist es weiterhin, wenn das Abschirmmodul ein oberhalb der Abschirmung angeordnetes zweites Tragelement aus einem Material mit einer elektrischen Leitfähigkeit ≤ 10⁻⁴ S/m und einer magnetischen Leitfähigkeit beziehungsweise Permeabilität µr ≤ 2 aufweist, wobei das zweite Tragelement die genannten Stützen umfasst oder wobei die genannten Stützen auf dem zweiten Tragelement angeordnet sind. Die Stützen können beispielsweise an das zweite Tragelement angeformt oder auf dieses aufgeklebt sein. Dadurch ist eine Kraftübertragung vom zweiten Tragelement, das insbesondere auch eine Spule aufnehmen kann, auf die Stützen besonders gut möglich.

Günstig ist es darüber hinaus, wenn das Abschirmmodul ein unterhalb der Abschirmung angeordnetes erstes Tragelement aus einem Material mit einer elektrischen Leitfähigkeit ≤ 10⁻⁴ S/m und einer magnetischen Leitfähigkeit beziehungsweise Permeabilität µr ≤ 2 aufweist, wobei das erste Tragelement die genannten Stützen umfasst oder wobei die genannten Stützen auf dem ersten Tragelement angeordnet sind. Die Stützen können beispielsweise an das erste Tragelement angeformt oder auf dieses aufgeklebt sein. Auf diese Weise ist eine rationelle Herstellung des Abschirmmoduls möglich, da die Abschirmung beim Auflegen auf das erste Tragelement mehr oder minder automatisch positioniert wird.

Zwar sind Ausführungen, bei denen die Stützen auf dem ersten oder zweiten Tragelement angeordnet oder von diesem umfasst sind, vorteilhaft, notwendig ist dies jedoch nicht. Vielmehr ist es prinzipiell auch denkbar, dass die die Stützen gesonderte Bauteile bilden, die lose auf das erste Tragelement aufgelegt respektive in die ersten Ausnehmungen der Abschirmung eingelegt werden.

Günstig ist es weiterhin, wenn die Stützen und/oder das erste Tragelement und/oder das zweite Tragelement aus einem Kunststoff, aus Glas oder aus einem Verbundwerkstoff beinhaltend Kunststoff und/oder Keramik besteht/bestehen. Diese Materialien weisen einerseits eine hohe mechanische Stabilität (insbesondere Druckstabilität) auf, besitzen aber auch vorteilhafte elektrische und magnetische Eigenschaften. Das heisst, es werden keine nennenswerten Wirbelströme in dem Material induziert und auch das magnetische Feld wird nicht wesentlich durch das Material (um)geleitet.

Insbesondere treffen die genannten Eigenschaften auf glasfaserverstärktes Polyamid zu. Besonders günstig ist es demzufolge, wenn die Stützen und/oder das erste Tragelement und/oder das zweite Tragelement aus glasfaserverstärktem Polyamid besteht/bestehen.

Günstig ist es weiterhin, wenn die Abschirmung aus Ferrit besteht. Dieses Material weist eine gute magnetische Leitfähigkeit auf und ist leicht verfügbar. Die Aufgabe der Erfindung kann in diesem Fall auch darin gesehen werden, das kostengünstige Material für Anwendungen mit hohen mechanischen Anforderungen einsetzbar zu machen.

Vorteilhaft ist es zudem, wenn die ersten Ausnehmungen eine Fläche in einem Bereich von 5% bis 50% des horizontalen Abschnitts der Abschirmung belegen. Auf diese Weise ist eine Ableitung der auf die Abschirmung wirkenden Kräfte ohne wesentliche Beeinflussung der Kopplung zwischen Sender und Empfänger besonders gut möglich.

Besonders vorteilhaft ist es auch, wenn eine erste Ausnehmung, in der Ebene des horizontalen Abschnitts gemessen, eine Fläche in einem Bereich von 0.5 cm² bis 5 cm² aufweist. Auch mit Hilfe dieser Massnahme ist eine Ableitung der auf das Abschirmmodul wirkenden Kräfte ohne wesentliche Beeinflussung der Kopplung zwischen Sender und Empfänger besonders gut möglich.

Besonders vorteilhaft ist es auch, wenn die Abschirmung aus mehreren Bauteilen zusammengesetzt ist, deren Fläche, in der Ebene des horizontalen Abschnitts gemessen, jeweils in einem Bereich von 2 cm² bis 200 cm² liegt. Dadurch können innerhalb der Abschirmung keine nennenswerten mechanischen Biege- oder Zugspannungen übertragen werden. Sollte trotz aller Massnahmen einmal ein Bauteil der Abschirmung zu Bruch gehen, dann kann die Abschirmung durch Auswechseln des defekten Bauteils mit relativ kleinem finanziellen Aufwand wieder instand gesetzt werden.

Besonders vorteilhaft ist es darüber hinaus, wenn die Abschirmung aus mehreren Bauteilen zusammengesetzt ist, deren Volumen jeweils in einem Bereich von 0.5 cm³ bis 200 cm³ liegt. Dadurch kann die Abschirmung auf einfache Weise hergestellt werden, da zum Beispiel Ferrit-Plättchen dieser Grössenordnung einerseits wenig bruchgefährdet sind, andererseits auch als Standardware leicht erhältlich sind. Insbesondere kann die Abschirmung auch aus mehreren Lagen der Bauteile/Ferrit-Plättchen aufgebaut sein, im Speziellen aus zwei Lagen. Dadurch kann beispielsweise der thermische Ausgleich innerhalb der Abschirmung verbessert werden.

Generell ist es von Vorteil, wenn die längere Seite des Abschirmmoduls in einem Bereich von 400 mm bis inklusive 800 mm und/oder die kürzere Seite des Abschirmmoduls in einem Bereich von 200 mm bis inklusive 600 mm liegt. Dadurch eignet sich die Abschirmung von ihrer Dimension her gut für die Ladung eines Akkumulators in einem Kraftfahrzeug.

Besonders vorteilhaft ist es, wenn zwischen einer ersten Ausnehmung der Abschirmung und einer durch diese hindurch ragende Stütze ein Spiel beziehungsweise Spalt vorgesehen ist. Dadurch wird eine unerwünschte Kraftübertragung von den Stützen auf die magnetische Abschirmung wirksam vermieden oder wenigstens verringert. Darüber hinaus kann auch zwischen einer zweiten Ausnehmung des ersten Tragelements und einer durch diese hindurch ragende Stütze ein Spiel beziehungsweise Spalt vorgesehen sein. Dadurch wird auch eine unerwünschte Kraftübertragung von den Stützen auf das erste Tragelement wirksam vermieden oder wenigstens verringert.

Besonders vorteilhaft ist es darüber hinaus, wenn die Abschirmung im Bereich der Ausnehmungen von den Stützen überragt wird. Dies ist eine weitere Massnahme, wodurch eine unerwünschte Kraftübertragung auf die magnetische Abschirmung wirksam vermieden oder wenigstens verringert werden kann.

In einer weiteren vorteilhaften Variante des Abschirmmoduls
- ist das erste Tragelement wannenförmig ausgebildet und zudem für die Aufnahme der magnetischen Abschirmung ausgebildet, und
- die magnetische Abschirmung ist wannenförmig ausgebildet und für die Aufnahme der Sendespule/Empfangsspule vorgesehen.

Insbesondere kann die Sendespule/Empfangsspule in das zweite Tragelement eingebettet sein, das wiederum in der wannenförmig ausgebildeten, magnetischen Abschirmung aufgenommen ist. Durch diese geschachtelte Bauform ergibt sich eine vorteilhafte Feldführung bei kompakten Aussenabmessungen.

Im Rahmen der Erfindung sind unter dem Begriff "Aufnahme" insbesondere auch Ausführungsformen zu verstehen, bei denen das zweite Tragelement von der magnetischen Abschirmung / dem ersten Tragelement mechanisch entkoppelt ist. Das heisst, dass dann keine substantielle Kraftübertragung vom zweiten Tragelement auf die magnetischen Abschirmung / das erste Tragelement erfolgt, sondern auf das zweite Tragelement wirkende Kräfte anderweitig abgeleitet werden. Insbesondere kann dazu zwischen einer ersten Ausnehmung der Abschirmung / zweiten Ausnehmung des ersten Tragelements und einer durch diese hindurch ragende Stütze ein Spiel beziehungsweise Spalt vorgesehen sein.

Günstig ist es, wenn das erste Tragelement und die magnetische Abschirmung innerhalb eines für die Ringspule vorgesehenen Bereichs erhöht sind, und innere Wannenwände insbesondere gleich hoch sind wie äussere Wannenwände. Durch diese Massnahme werden die Kopplung zwischen Sender und Empfänger und das vom Sender emittierte Streufeld verbessert, das heisst die Kopplung wird erhöht und das Streufeld verringert beziehungsweise räumlich eingedämmt.

Günstig ist es weiterhin, wenn das erste Tragelement und die magnetische Abschirmung eine zentrale Ausnehmung aufweisen. Dadurch werden Kopplung und Streufeld weiter verbessert. Durch die zentrale Ausnehmung kann überdies die Kühlung verbessert werden. Denkbar ist auch, im Bereich der Ausnehmung weitere Verstärkungen anzubringen, um die mechanische Stabilität eines Senders/Empfängers zu verbessern. Beispielsweise kann im Bereich der Ausnehmung eine weitere (grosse) Stütze angeordnet sein.

Günstig ist es darüber hinaus, wenn das erste Tragelement und die magnetische Abschirmung innenseitige flügelartige Fortsätze auf den inneren Wannenwänden und/oder aussenseitige flügelartige Fortsätze auf den äusseren Wannenwänden aufweisen. Auch durch diese Massnahme können die Kopplung zwischen Sender und Empfänger und das vom Sender emittierte Streufeld verbessert werden.

An dieser Stelle wird angemerkt, dass sich die zum Abschirmmodul offenbarten Varianten und die daraus resultierenden Vorteile gleichermassen auf den offenbarten Sender/Empfänger und das offenbarte Energieübertragungssystem beziehen und umgekehrt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: ein Beispiel eines Abschirmmoduls im Schrägschnitt;
- Fig. 2: ein erstes Beispiel eines Tragelements für ein Abschirmmodul im Schrägschnitt;
- Fig. 3: ein zweites Beispiel eines Tragelements für ein Abschirmmodul im Schrägschnitt;
- Fig. 4: ein Detail des Abschirmmoduls aus Fig. 1 in Draufsicht;
- Fig. 5: einen beispielhaften Sender eines Energieübertragungssystems im Schrägschnitt;
- Fig. 6: eine Draufsicht auf den Sender aus Fig. 5 schräg von oben;
- Fig. 7: den Sender aus Fig. 6 schräg von unten und mit abgenommener Bodenplatte;
- Fig. 8: eine beispielhafte Anordnung, umfassend eine Spule und eine magnetische Abschirmung in Draufsicht;
- Fig. 9: einen Schnitt durch die Längsseite der der Anordnung aus Fig. 8;
- Fig. 10: einen Schnitt durch die Schmalseite der der Anordnung aus Fig. 8;
- Fig. 11: einen Schnitt durch die Längsseite der der Anordnung aus Fig. 7 beziehungsweise Fig. 8;
- Fig. 12: einen Schnitt durch die Schmalseite der der Anordnung aus Fig. 7 beziehungsweise Fig. 8 und
- Fig. 13: ein beispielhaftes Energieübertragungssystem bei einem Kraftfahrzeug.

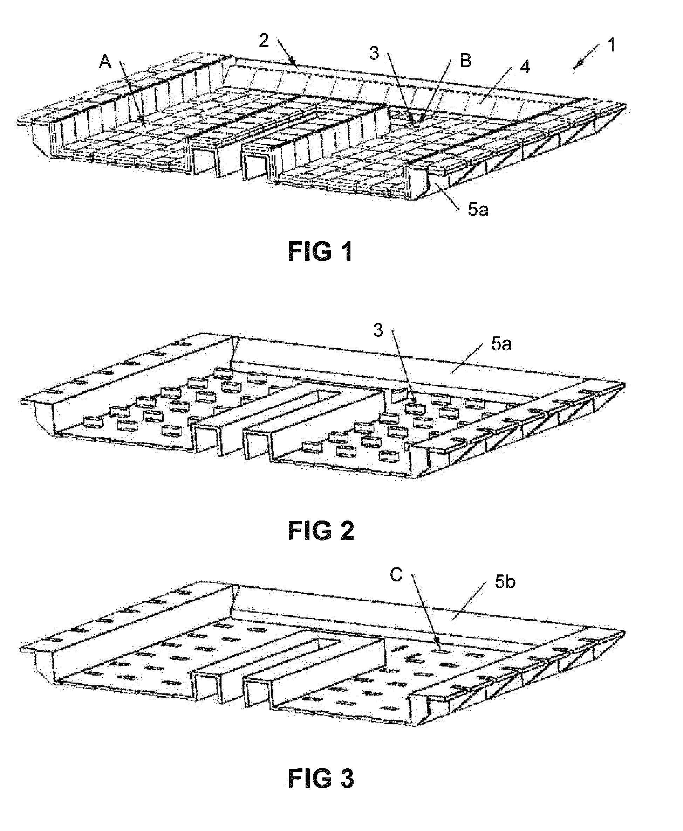

Fig. 1 zeigt ein Beispiel eines Abschirmmoduls 1 für eine ringförmige Sendespule/Empfangsspule eines kontaktlosen Energieübertragungssystems. Das Abschirmmodul 1 umfasst eine magnetische Abschirmung 2 mit einer magnetischen Leitfähigkeit beziehungsweise Permeabilität µr ≥ 4. Insbesondere besteht die Abschirmung 2 aus Ferrit. Im Bereich eines horizontalen Abschnitts A weist die Abschirmung 2 erste Ausnehmungen B auf, durch welche Stützen 3 aus einem Material mit einer elektrischen Leitfähigkeit ≤ 10⁻⁴ S/m und einer magnetischen Leitfähigkeit beziehungsweise Permeabilität µr ≤ 2 hindurch ragen. Insbesondere können die Stützen 3 aus einem Kunststoff, aus Glas oder aus einem Verbundwerkstoff beinhaltend Kunststoff und/oder Keramik bestehen, im Speziellen bestehen die Stützen 3 aus Glasfaser-verstärktem Polyamid. Denkbar ist aber auch der Einsatz anderer Materialien, welche das Magnetfeld nicht oder nur unwesentlich beeinträchtigen.

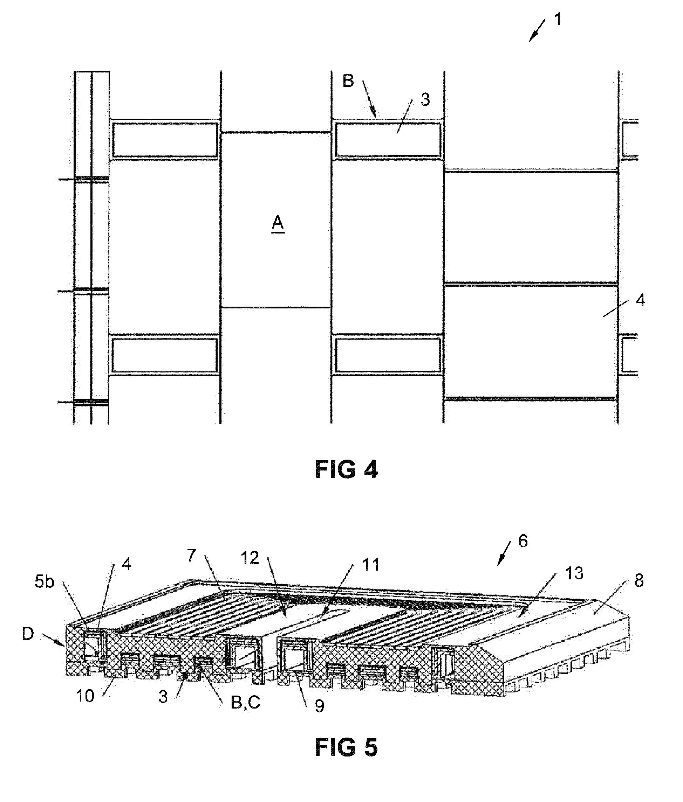

Die Abschirmung 2 ist in dem konkreten Beispiel aus mehreren Bauteilen 4 (hier Plättchen) zusammengesetzt (siehe auch Fig. 4). Um die Plättchen 4 an ihrem vorgesehenen Platz zu halten, umfasst das Abschirmmodul 1 in der in Fig. 1 dargestellten Bauweise ein erstes Tragelement 5a, auf dem die Plättchen 4 beispielsweise lose aufliegen können oder auch auf diesem angeklebt sein können. Das erste Tragelement 5a besteht wiederum aus einem Material mit einer elektrischen Leitfähigkeit ≤ 10⁻⁴ S/m und einer magnetischen Leitfähigkeit beziehungsweise Permeabilität µr ≤ 2. Insbesondere kann auch das erste Tragelement 5a aus einem Kunststoff, aus Glas oder aus einem Verbundwerkstoff beinhaltend Kunststoff und/oder Keramik bestehen, im Speziellen aus Glasfaser-verstärktem Polyamid. Prinzipiell kann die Abschirmung 2 aber auch einteilig ausgeführt sein und prinzipiell kann das erste Tragelement 5a auch entfallen.

Fig. 2 zeigt ein erstes Beispiel eines ersten Tragelements 5a in gesonderter Darstellung, in welcher die Stützen 3 gut zu sehen sind. Das erste Tragelement 5a kann die genannten Stützen 3 umfassen, oder die genannten Stützen 3 können auf dem ersten Tragelement 5a angeordnet sein. Die Stützen 3 können beispielsweise an das erste Tragelement 5a angeformt oder auf dieses aufgeklebt sein. Prinzipiell ist es aber auch möglich, dass die Stützen 3 gesonderte Bauteile bilden, die lose auf das erste Tragelement 5a aufgelegt respektive in die ersten Ausnehmungen B der Abschirmung 2 / zwischen die Plättchen 4 eingelegt werden. Das erste Tragelement 5a kann somit auch einen glatten Boden aufweisen.

Fig. 3 zeigt ein weiteres Beispiel eines ersten Tragelements 5b, das zweite Ausnehmungen C aufweist, durch welche die genannten Stützen 3 hindurch ragen. Beispielsweise können lose Stützen 3 in die Ausnehmungen C eingesteckt oder eingeklebt werden. Denkbar ist aber auch, dass das Abschirmmodul 1 ein zweites Tragelement oberhalb der Abschirmung 2 aufweist, das die genannten Stützen 3 umfasst oder auf dem die genannten Stützen 3 angeordnet sind. Diese Stützen 3 können dann von oben durch die zweiten Ausnehmungen C hindurch ragen (siehe auch die Figuren 5 bis 12).

Fig. 4 zeigt nun ein Detail des Abschirmmoduls 1 in Draufsicht. Aus der Fig. 4 ist insbesondere erkennbar, dass zwischen einer ersten Ausnehmung B der Abschirmung 2 und einer durch diese hindurch ragenden Stütze 3 ein Spiel beziehungsweise Spalt vorgesehen sein kann. Auf diese Weise wird vermieden, dass Kräfte in nennenswerter Grösse von den Stützen 3 auf die Abschirmung 2 übertragen werden. Prinzipiell kann dieses Spiel oder dieser Spalt auch entfallen. Weist das Abschirmmodul 1 ein erstes Tragelement 5b nach Fig. 3 auf, so kann insbesondere vorgesehen sein, dass die zweiten Ausnehmungen C gleich gross sind wie die ersten Ausnehmungen B oder es einen Schnittbereich der Ausnehmungen B, C gibt, durch welchen die Stützen 3 hindurch ragen. Von Vorteil ist es auch, wenn die Abschirmung 2 im Bereich der Ausnehmungen B, C (vertikal) von den Stützen 3 überragt wird. Auf diese Weise kann eine Einleitung von Kräften in die Abschirmung 2 ebenfalls vermieden werden. Darüber hinaus kann auch ein Spiel beziehungsweise Spalt zwischen einer zweiten Ausnehmungen C und einer durch diese hindurch ragenden Stütze 3 vorgesehen sein, um die Stütze 3 mechanisch von dem ersten Tragelement 5b zu entkoppeln.

Generell ist es von Vorteil, wenn die ersten Ausnehmungen B eine Fläche in einem Bereich von 5% bis 50% des horizontalen Abschnitts A der Abschirmung 2 belegen. Weiterhin ist es von Vorteil, wenn eine erste Ausnehmung B eine Fläche in einem Bereich von 0.5 cm² bis 5 cm² (in der Ebene des horizontalen Abschnitts A gemessen) aufweist. Auf diese Weise ist eine Ableitung der auf das Abschirmmodul 1 wirkenden Kräfte ohne wesentliche Beeinflussung der Kopplung zwischen Sender und Empfänger möglich

Generell ist es auch von Vorteil, wenn die Fläche der Plättchen 4 jeweils in einem Bereich von 2 cm² bis 200 cm² (in der Ebene des horizontalen Abschnitts A gemessen) liegt. Von Vorteil ist es auch, wenn das Volumen der Plättchen 4 jeweils in einem Bereich von 0.5 cm³ bis 200 cm³ liegt. Dadurch können innerhalb der Abschirmung 2 keine nennenswerten mechanischen Biege- oder Zugspannungen entstehen, und die Reparatur einer defekten Abschirmung 2 ist durch Auswechseln eines defekten Bauteils 4 mit relativ kleinem finanziellen Aufwand möglich. Zudem sind (Ferrit)Plättchen 4 dieser Grössenordnung leicht erhältlich. Durch die vorgeschlagenen Massnahmen lässt sich ein Abschirmmodul 1 in den für ein Fahrzeug-Ladesystem benötigten Dimensionen (beispielsweise kann das Abschirmmodul 1 von 200 mm bis inklusive 600 mm breit, 400 mm bis inklusive 800 mm lang und 20 mm bis inklusive 60 mm hoch sein) dadurch leichter aufbauen.

Fig. 5 zeigt nun einen Schrägschnitt durch einen Sender 6 eines Energieübertragungssystems, umfassend ein Abschirmmodul 1 sowie eine in der Abschirmung 2 angeordnete Sendespule 7. Ferner umfasst der Sender 6 ein zweites Tragelement 8, eine Aluminium-Platte 9 sowie eine Bodenplatte 10.

Das zweite Tragelement 8 ist aus einem Material mit einer elektrischen Leitfähigkeit ≤ 10⁻⁴ S/m und einer magnetischen Leitfähigkeit beziehungsweise Permeabilität µr ≤ 2 hergestellt. Insbesondere kann das zweite Tragelement 8 wiederum aus einem Kunststoff, aus Glas oder aus einem Verbundwerkstoff beinhaltend Kunststoff und/oder Keramik bestehen, im Speziellen aus Glasfaser-verstärktem Polyamid. Das zweite Tragelement 8 kann die Stützen 3 umfassen, die Stützen 3 können auf dem zweiten Tragelement 8 angeordnet sein, oder die Stützen 3 können natürlich auch bei Vorhandensein eines zweiten Tragelements 8 als lose Bauteile ausgebildet sein. Im vorliegenden Beispiel sind die Stützen 3 an das zweite Tragelement 8 angeformt.

Generell können die Stützen 3 (wenn sie lose oder beispielsweise aufgeklebt sind) aus einem vom ersten Tragelement 5a, 5b und/oder vom zweiten Tragelement 8 unterschiedlichen Material gefertigt sein, oder auch aus demselben Material. Auch das erste Tragelement 5a, 5b und das zweite Tragelement 8 könnten aus unterschiedlichen Materialien oder aus demselben Material gefertigt sein.

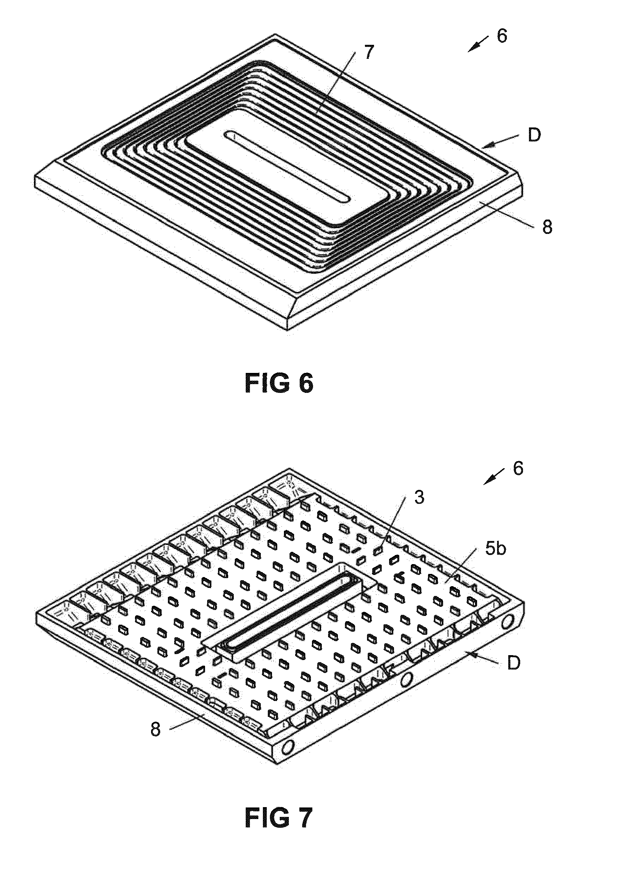

Der in Fig. 6 dargestellte Sender 6 weist nun folgende Merkmale auf:
- das erste Tragelement 5a, 5b des Abschirmmoduls 1 ist wannenförmig ausgebildet (siehe auch die Figuren 2 und 3),
- das erste Tragelement 5a, 5b des Abschirmmoduls 1 ist für die Aufnahme der magnetischen Abschirmung 2 ausgebildet (siehe auch die Figur 1),
- die magnetische Abschirmung 2 des Abschirmmoduls 1 ist ebenfalls wannenförmig ausgebildet (siehe Figur 1),
- die magnetische Abschirmung 2 des Abschirmmoduls 1 ist (hier indirekt) für die Aufnahme der Sendespule 7 vorgesehen,
- die Sendespule ist in das zweite Tragelement 8 eingebettet, das wiederum in der wannenförmig ausgebildeten, magnetischen Abschirmung 2 aufgenommen ist.

Durch die geschachtelte Bauform ergibt sich eine vorteilhafte Feldführung bei kompakten Aussenabmessungen. Konkret wird die Kopplung zwischen Sender 6 und Empfänger erhöht und das vom Sender 6 emittierte Streufeld verringert beziehungsweise räumlich eingedämmt.
- das erste Tragelement 5a, 5b und die magnetische Abschirmung 2 sind innerhalb eines für die Ringspule 7 vorgesehenen Bereichs erhöht, wobei innere Wannenwände insbesondere gleich hoch sind wie äussere Wannenwände (siehe auch Figur 1),
- das erste Tragelement 5a, 5b und die magnetische Abschirmung 2 weisen eine zentrale Ausnehmung 11 auf (siehe auch Figur 5),
- das erste Tragelement 5a, 5b und die magnetische Abschirmung 2 weisen auf den inneren Wannenwänden innenseitige flügelartige Fortsätze 12 auf (siehe auch Figur 5),
- das erste Tragelement 5a, 5b und die magnetische Abschirmung 2 weisen auf den äusseren Wannenwänden aussenseitige flügelartige Fortsätze 13 auf (siehe auch Figur 5),

Durch die vorgeschlagenen Massnahmen werden die Kopplung und das Streufeld weiter verbessert.
- die Abschirmung 2 wird im Bereich der Ausnehmungen B, C von den Stützen 3 überragt.

Dadurch kann eine unerwünschte Kraftübertragung von den Stützen 3 auf die magnetische Abschirmung 2 respektive auf das erste Tragelement 5a, 5b vermieden oder wenigstens verringert werden.

Ergänzend zeigen die Figuren 6 bis 12 den Sender 6 respektive Teile davon. Fig. 6 zeigt den Sender 6 schräg von oben, die Fig. 7 schräg von unten, jedoch mit abgenommener Bodenplatte 10. Um die Orientierung des Senders 6 in den Figuren 5-7 besser erkennbar zu machen, ist die Bezugsfläche D in den genannten Figuren bezeichnet.

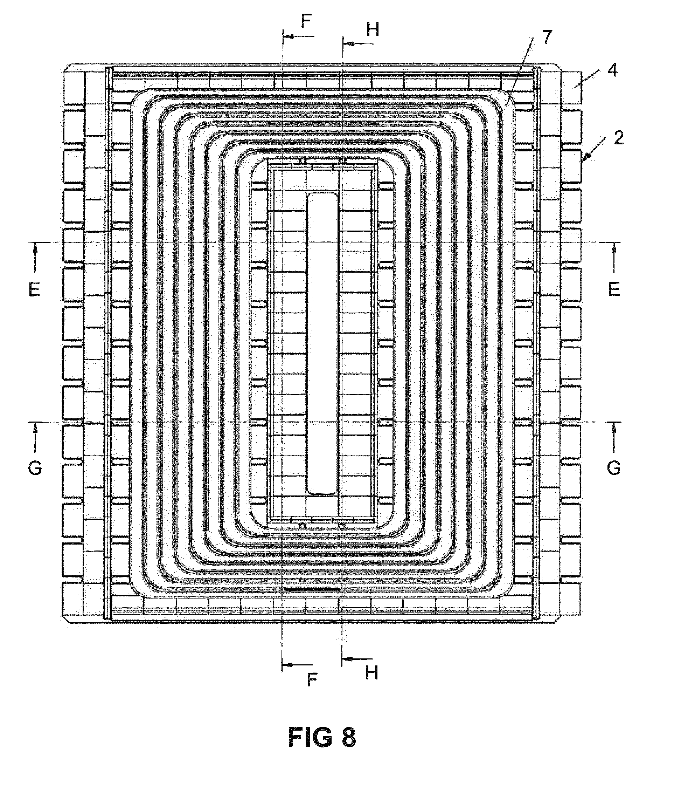

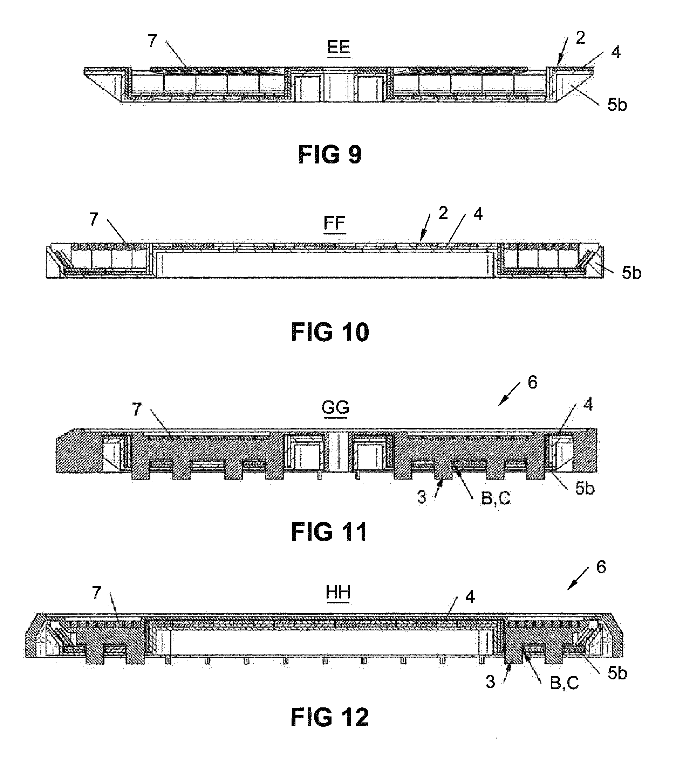

Fig. 8 zeigt ergänzend eine Draufsicht auf Anordnung der Sendespule 7 und der Abschirmung 2 in gesonderter Darstellung. Die Fig. 9 zeigt den Schnitt EE durch die Anordnung aus Fig. 8 und die Fig. 10 zeigt den Schnitt FF durch dieselbe. Die Fig. 11 zeigt einen Schnitt GG durch den kompletten Sender 6 (jedoch ohne Bodenplatte 10) und die Fig. 12 den Schnitt HH durch denselben.

In den in den Figuren 1 bis 12 gezeigten Ausführungen sind die Stützen 3 vertikal ausgerichtet. Dies ist zwar vorteilhaft um vorwiegend vertikal wirkende Kräfte gut abzuleiten, jedoch können die Stützen 3 gegenüber der Vertikalen auch geneigt sein. Zudem können die Stützen 3 generell nicht nur Kräfte aufnehmen die in Ihrer Längserstreckung wirken, sondern auch in einer Querrichtung wirkende Kräfte oder Kraftkomponenten, insbesondere wenn die Stützen 3 mit dem ersten Tragelement 5a, 5b beziehungsweise zweiten Tragelement 8 verbunden oder von diesem umfasst sind.

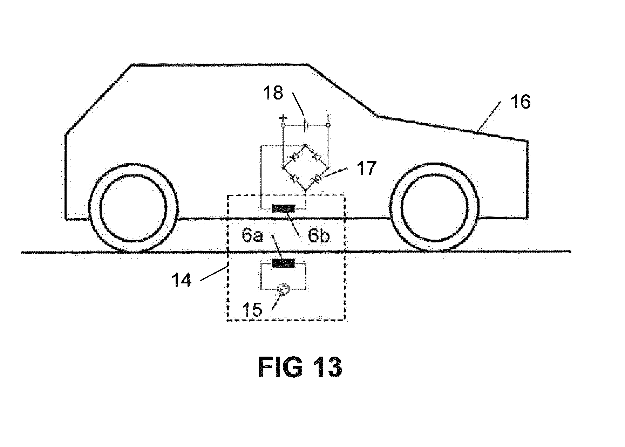

Fig. 13 zeigt nun ein Energieübertragungssystem 14, umfassend einen Sender 6a mit einer daran angeschlossenen Stromversorgung 15 und einen in einem Kraftfahrzeug 16 eingebauten Empfänger 6b. Der Sender 6a und der Empfänger 6b weisen jeweils ein Abschirmmodul 1 mit einer darin angeordneten Spule 7 auf. Dies ist zwar vorteilhaft, der Sender 6a oder der Empfänger 6b kann aber auch anders aufgebaut sein.

Aus der Stromversorgung 15 stammende elektrische Energie wird mit Hilfe des Senders 6a an den Empfänger 6b übertragen, dort mit Hilfe des Gleichrichters 17 gleichgerichtet und schliesslich für die Ladung eines in dem Kraftfahrzeug 16 angeordneten Akkumulators 18 eingesetzt. Auf die gezeigte Weise kann also eine Elektrofahrzeug 16 kontaktlos aufgeladen werden.

Die Abschirmungen 2 sind beim Laden jeweils aussenliegend angeordnet, und die Spulen 7 sind einander zugewandt. Das heisst die Abschirmung 2 des Senders 6a befindet sich in der in den Figur 5 dargestellten Lage, die Abschirmung 2 des Empfängers 6b ist dagegen kopfüber angeordnet. Mit anderen Worten befindet sich eine Abschirmung 2 des Senders 6a in der Fig. 13 unterhalb einer Sendespule 7, die Abschirmung 2 des Empfängers 6b oberhalb einer Empfangsspule 7.

Generell kann für die Anordnung der Figur 13 eine beliebige Anordnung der Stützen 3 vorgesehen sein, das heisst diese können lose sein, auf dem ersten Tragelement 5a, 5b angeordnet / von diesem umfasst sein oder auf dem zweiten Tragelement 8 angeordnet / von diesem umfasst sein. Durch die vorgeschlagenen Massnahmen werden übermässige mechanische Beanspruchungen der Abschirmung 2 vermieden. Der Sender 6a kann daher gefahrlos vom Fahrzeug 16 überfahren werden, beziehungsweise richtet ein Aufsitzen des Fahrzeugs 16 keinen oder nur geringen Schaden im Empfänger 6b an.

An dieser Stelle wird auch angemerkt, dass sich die vorgeschlagenen Massnahmen beliebig kombinieren lassen und die Stützen 3 auch anders als dargestellt angeordnet sein können. Beispielsweise können diese im Bereich des horizontalen Abschnitts A versetzt angeordnet sein. Darüber hinaus können Stützen 3 auch ausserhalb des horizontalen Abschnitts A angeordnet sein, beispielsweise auf den vertikalen oder schräg verlaufenden Wänden der Abschirmung 2.

Abschliessend wird auch angemerkt, dass die dargestellten Anordnungen in der Realität auch mehr Bauteile als dargestellt umfassen können und unter Umständen verzerrt dargestellt sind. Weiterhin wird angemerkt, dass sich die obigen Ausgestaltungen und Weiterbildungen der Erfindung auf beliebige Art und Weise kombinieren lassen.

### Bezugszeichenliste

- 1: Abschirmmodul
- 2: magnetische Abschirmung
- 3: Stütze
- 4: (Ferrit)Plättchen
- 5a, 5b: erstes Tragelement
- 6, 6a: Sender
- 7: Sendespule
- 8: zweites Tragelement
- 9: Aluminiumplatte
- 10: Bodenplatte
- 11: zentrale Ausnehmung
- 12: flügelartiger Fortsatz (innenseitig)
- 13: flügelartiger Fortsatz (aussenseitig)
- 14: Energieübertragungssystem
- 15: Stromquelle
- 16: Kraftfahrzeug
- 17: Gleichrichter
- 18: Akkumulator
- A: horizontaler Abschnitt
- B: erste Ausnehmung
- C: zweite Ausnehmung
- D: Bezugsfläche

## Patentansprüche

1. Abschirmmodul (1) für eine ringförmige Sendespule/Empfangsspule (7) eines kontaktlosen Energieübertragungssystems (14), umfassend eine magnetische Abschirmung (2) mit einer magnetischen Leitfähigkeit beziehungsweise Permeabilität µr ≥ 4,
**dadurch gekennzeichnet, dass**
die Abschirmung (2) im Bereich eines horizontalen Abschnitts (A) erste Ausnehmungen (B) aufweist, durch welche Stützen (3) aus einem Material mit einer elektrischen Leitfähigkeit ≤ 10⁻⁴ S/m und einer magnetischen Leitfähigkeit beziehungsweise Permeabilität µr ≤ 2 hindurch ragen.

2. Abschirmmodul (1) nach Anspruch 1, **gekennzeichnet durch** ein unterhalb der Abschirmung (2) angeordnetes erstes Tragelement (5a, 5b) aus einem Material mit einer elektrischen Leitfähigkeit ≤ 10⁻⁴ S/m und einer magnetischen Leitfähigkeit beziehungsweise Permeabilität µr ≤ 2, wobei das erste Tragelement (5a, 5b) zweite Ausnehmungen (C) aufweist, **durch** welche die genannten Stützen (3) hindurch ragen.

3. Abschirmmodul (1) nach Anspruch 1 oder 2, **gekennzeichnet durch** ein oberhalb der Abschirmung (2) angeordnetes zweites Tragelement (8) aus einem Material mit einer elektrischen Leitfähigkeit ≤ 10⁻⁴ S/m und einer magnetischen Leitfähigkeit beziehungsweise Permeabilität µr ≤ 2, wobei das zweite Tragelement (8) die genannten Stützen (3) umfasst oder wobei die genannten Stützen (3) auf dem zweiten Tragelement (8) angeordnet sind.

4. Abschirmmodul (1) nach Anspruch 1, **gekennzeichnet durch** ein unterhalb der Abschirmung (2) angeordnetes erstes Tragelement (5a, 5b) aus einem Material mit einer elektrischen Leitfähigkeit ≤ 10⁻⁴ S/m und einer magnetischen Leitfähigkeit beziehungsweise Permeabilität µr ≤ 2, wobei das erste Tragelement (5a, 5b) die genannten Stützen (3) umfasst oder wobei die genannten Stützen (3) auf dem ersten Tragelement (5a, 5b) angeordnet sind.

5. Abschirmmodul (1) nach einem der Ansprüche 1 bis 4, **dadurch gekennzeichnet, dass** die Stützen (3) und/oder im Falle der Ansprüche 2 bis 4 das erste Tragelement (5a, 5b) und/oder im Falle der Ansprüche 3 bis 4 das zweite Tragelement (8) aus einem Kunststoff, aus Glas oder aus einem Verbundwerkstoff beinhaltend Kunststoff und/oder Keramik besteht/bestehen.

6. Abschirmmodul (1) nach Anspruch 5, **dadurch gekennzeichnet, dass** die Stützen (3) und/oder das erste Tragelement (5a, 5b) und/oder das zweite Tragelement (8) aus Glasfaser-verstärktem Polyamid besteht/bestehen.

7. Abschirmmodul (1) nach einem der Ansprüche 1 bis 6, **dadurch gekennzeichnet, dass** die Abschirmung (2) aus Ferrit besteht.

8. Abschirmmodul (1) nach einem der Ansprüche 1 bis 7, **dadurch gekennzeichnet, dass** die ersten Ausnehmungen (B) eine Fläche in einem Bereich von 5% bis 50% des horizontalen Abschnitts (A) der Abschirmung (2) belegen.

9. Abschirmmodul (1) nach einem der Ansprüche 1 bis 8, **dadurch gekennzeichnet, dass** eine erste Ausnehmung (B), in der Ebene des horizontalen Abschnitts (A) gemessen, eine Fläche in einem Bereich von 0.5 cm² bis 5 cm² aufweist.

10. Abschirmmodul (1) nach einem der Ansprüche 1 bis 9 **dadurch gekennzeichnet, dass** die Abschirmung (2) aus mehreren Bauteilen (4) zusammengesetzt ist, deren Fläche, in der Ebene des horizontalen Abschnitts (A) gemessen, jeweils in einem Bereich von 2 cm² bis 200 cm² liegt.

11. Abschirmmodul (1) nach einem der Ansprüche 1 bis 10 **dadurch gekennzeichnet, dass** die Abschirmung (2) aus mehreren Bauteilen (4) zusammengesetzt ist, deren Volumen jeweils in einem Bereich von 0.5 cm³ bis 200 cm³ liegt.

12. Abschirmmodul (1) nach einem der Ansprüche 1 bis 11 **dadurch gekennzeichnet, dass** zwischen einer ersten Ausnehmung (B) der Abschirmung (2) und einer durch diese hindurch ragenden Stütze (3) ein Spiel beziehungsweise Spalt vorgesehen ist.

13. Abschirmmodul (1) nach einem der Ansprüche 1 bis 12 **dadurch gekennzeichnet, dass** die Abschirmung (2) im Bereich der Ausnehmungen (B) von den Stützen (3) überragt wird.

14. Abschirmmodul (1) nach einem der Ansprüche 2 bis 13, **dadurch gekennzeichnet,**
- **dass** das erste Tragelement (5a, 5b) wannenförmig ausgebildet und für die Aufnahme der magnetischen Abschirmung (2) ausgebildet ist und
- **dass** die magnetische Abschirmung (2) wannenförmig ausgebildet für die Aufnahme der Sendespule/Empfangsspule (7) vorgesehen ist.

15. Abschirmmodul (1) nach Anspruch 14, **dadurch gekennzeichnet, dass** das erste Tragelement (5a, 5b) und die magnetische Abschirmung (2) innerhalb eines für die Sendespule/Empfangsspule (7) vorgesehenen Bereichs erhöht sind.

16. Abschirmmodul (1) nach einem der Ansprüche 2 bis 15, **dadurch gekennzeichnet, dass** das erste Tragelement (5a, 5b) und die magnetische Abschirmung (2) eine zentrale Ausnehmung (11) aufweisen.

17. Abschirmmodul (1) nach einem der Ansprüche 14 bis 16, **dadurch gekennzeichnet, dass** das erste Tragelement (5a, 5b) und die magnetische Abschirmung (2) innenseitige flügelartige Fortsätze (12) auf den inneren Wannenwänden und/oder aussenseitige flügelartige Fortsätze (13) auf den äusseren Wannenwänden aufweisen.

18. Sender/Empfänger (6, 6a, 6b) eines Energieübertragungssystems (14), umfassend ein Abschirmmodul (1) nach einem der Ansprüche 1 bis 17, **gekennzeichnet durch** eine in der Abschirmung (2) angeordnete Sendespule/Empfangsspule (7).

19. Energieübertragungssystem (14), **gekennzeichnet durch** einen Sender (6, 6a) nach Anspruch 18 sowie ein Kraftfahrzeug (16) mit einem eingebauten Empfänger (6b) nach Anspruch 18.

20. Verwendung eines Abschirmmoduls (1) nach einem der Ansprüche 1 bis 17 oder eines Senders/Empfängers (6, 6a, 6b) nach Anspruch 18 zur Ladung eines in einem Kraftfahrzeug (16) angeordneten Akkumulators (18).
